# EUROPÄISCHE PATENTSCHRIFT

(11) **EP 3 625 477 B1**
(45) Veröffentlichungstag und Bekanntmachung des Hinweises auf die Patenterteilung: **29.12.2021**
(21) Anmeldenummer: 18728016.9
(22) Anmeldetag: 09.05.2018
(51) Int. Cl.: F16F 15/131, F16F 15/134, F16F 15/139, F16F 15/14

(54) **DECKELLOSES ZWEIMASSENSCHWUNGRAD MIT EINEM FLIEHKRAFTPENDEL**
COVER-FREE DUAL MASS FLYWHEEL WITH A CENTRIFUGAL PENDULUM-TYPE ABSORBER
DOUBLE VOLANT AMORTISSEUR SANS COUVERCLE DOTÉ D'UN PENDULE À FORCE CENTRIFUGE

(30) Priorität: 17.05.2017 DE 102017110656
(43) Veröffentlichungstag der Anmeldung: 25.03.2020
(73) Patentinhaber: Schaeffler Technologies AG & Co. KG, 91074 Herzogenaurach (DE)
(72) Erfinder: STRASSER, Pascal, 67250 Aschbach (FR)
(86) Internationale Anmeldenummer: PCT/DE2018/100447
(87) Internationale Veröffentlichungsnummer: WO 2018/210378

(56) Entgegenhaltungen:
- WO-A1-2016/091259
- DE-A1-102014 207 962
- DE-A1-102015 210 743

## Beschreibung

Die Erfindung betrifft ein Zweimassenschwungrad, bestehend aus einem Primärteil und einem Sekundärteil, die um eine Rotationsachse relativ zueinander begrenzt verdrehbar sind, einer zwischen dem Primärteil und dem Sekundärteil wirksamen, Bogenfedern einschließenden Federdämpferanordnung, einer Reibeinrichtung mit zumindest einem federkraftbelasteten Reibring sowie einem dem Sekundärteil zugeordneten Fliehkraftpendel.

Drehschwingungsdämpfer sind allgemein bekannt. Diese werden zur Dämpfung von Drehschwingungen bzw. Torsionsschwingungen in Antriebssträngen von brennkraftmaschinengetriebenen Fahrzeugen eingesetzt, um die von der Brennkraftmaschine ausgehenden Schwingungen gegenüber dem Antriebsstrang weitgehend zu dämpfen und damit den Fahrkomfort zu erhöhen. Die bevorzugt eingesetzten Zweimassenschwungräder (ZMS) bewirken im nutzbaren Drehzahlbereich, zwischen der Leerlaufdrehzahl und einer maximalen Drehzahl, infolge ihrer geringen Drehsteifigkeit eine wirksame Schwingungsdämpfung. Beim Starten oder Abstellen der Brennkraftmaschine kann eine unterhalb der Leerlaufdrehzahl liegende Eigenfrequenz des ZMS durchlaufen werden. Die dabei auftretenden erhöhten Schwingungsamplituden führen zu einer erhöhten Geräuschentwicklung des Getriebes und/oder der Kupplung sowie einer zusätzlichen Bauteilbelastung im ZMS. Um diesen nachteiligen Effekt zu vermeiden ist es bekannt, im ZMS eine zusätzliche Reibeinrichtung sowie ein Fliehkraftpendel zu integrieren.

Die Erfindung DE10 2012 220 519 A1 zeigt ein ZMS bzw. einen Drehschwingungsdämpfer mit einem zweiteilig ausgeführten Sekundärteil, bei dem zwischen zwei Flanschelementen ein Verspannmechanismus vorgesehen ist. Die mit dem Primärteil und dem Sekundärteil verbundene Federdämpferanordnung umfasst in einen Federraum integrierte Bogenfedern sowie eine Reibeinrichtung. Sekundärteilseitig bzw. in Achsrichtung weisend ist der Drehschwingungsdämpfer von einem massiv gestalteten Deckel abgedeckt bzw. verschlossen, der stirnseitig an der äußeren Kontur der Primärmasse befestigt ist.

In der DE 10 2014 211 603 A1 ist ein Zweimassenschwungrad mit einem Primärteil und einem Sekundärteil gezeigt, die über eine Federdämpferanordnung, auch Bogenfederanordnung genannt, verbunden sind. Das mehrteilige Sekundärteil umfasst einen mit der Federdämpferanordnung zusammenwirkenden Bogenfederflansch sowie einen auch Abtriebsnabe genannten Abtriebsflansch, die über eine als Drehmomentbegrenzer ausgeführte Reibeinrichtung verbunden sind. Das Zweimassenschwungrad schließt weiterhin ein Fliehkraftpendel ein sowie ein über den Abtriebsflansch auf einem Führungsansatz des Primärteils zentriertes Sekundärteil.

Die DE102014207962 offenbart ein Zweimassenschwungrad nach dem Oberbegriff des Anspruchs 1.

Der Erfindung liegt die Aufgabe zugrunde, ein kostengünstig herstellbares, betriebssicheres Zweimassenschwungrad mit einem bauteil- und bauraumoptimierten Aufbau bereitzustellen.

Die Lösung der Aufgabe erfolgt erfindungsgemäß durch ein gemäß den Merkmalen des Anspruchs 1 aufgebautes Zweimassenschwungrad. Vorteilhafte Ausführungsformen sind in den abhängigen Ansprüchen angegeben.

Gemäß der Erfindung schließt das erfindungsgemäße Zweimassenschwungrad ein einteilig aufgebautes Sekundärteil ein, das mit äußeren jeweils als Bogenfederflansch ausgebildeten Flanschabschnitten mit den Bogenfedern der Federdämpferanordnung in einer Wirkverbindung steht. Das Sekundärteil bildet weiterhin eine beispielsweise mit einer Schaltkupplung zu verbindende Abtriebsnabe und ist über ein an dem Primärteil befestigtes Halteelement zentriert. Außerdem ist das erfindungsgemäß aufgebaute Zweimassenschwungrad auf der abtriebsseitigen Stirnseite von einem dünnwandigen Blech abgedeckt.

Durch den einteiligen Aufbau des Sekundärteils, den Entfall eines separaten Bogenfederflansches sowie die Anwendung eines dünnwandigen Blechs zur stirnseitigen

Abdeckung anstelle eines massiven dickwandigen Deckels, kann im Vergleich zu bekannten Lösungen ein bauraumoptimiertes Zweimassenschwungrad realisiert werden. Beispielsweise entfällt durch die Verwendung eines einteiligen Sekundärteils ein Zusammenfügen von dem Bogenfederflansch mit der Abtriebsnabe mittels Nietverbindungen. Das Zweimassenschwungrad gemäß der Erfindung beinhaltet weiterhin eine Reibeinrichtung sowie ein Sekundärteil mit zugehörigem Fliehkraftpendel sowie einer wirksamen Zentrierung.

Ein die erfindungsgemäßen Maßnahmen einschließendes Zweimassenschwungrad erfordert im Vergleich zu bisherigen Lösungen in axialer Richtung bzw. in Achsrichtung des Zweimassenschwungrades vorteilhaft einen zwischen 10 bis 20% verringerten Bauraum. Gleichzeitig umfasst das erfindungsgemäße ZMS einen reduzierten, mit einer Gewichtsreduktion verbundenen Bauteileumfang, der eine vereinfachte Montage ermöglicht, wodurch sich insgesamt ein gewünschter Kostenvorteil gegenüber bisherigen Zweimassenschwungrädern einstellt. Vorteilhaft kann mit dem erfindungsgemäßen Konzept ein kompaktes Zweimassenschwungrad ohne negativen Einfluss auf die Betriebssicherheit realisiert werden.

Erfindungsgemäß ist zur Zentrierung des Sekundärteils in einem Innenbereich des Zweimassenschwungrades eine Zentriereinrichtung vorgesehen, die zumindest ein getopftes oder gekröpftes, an dem Primärteil fixiertes Halteelement einschließt. Dabei bietet es sich an, dass über die Verschraubungen, mit denen das Primärteil an dem Kurbelwellenflansch der Brennkraftmaschine befestigt ist, gleichzeitig das Halteelement lagefixiert ist. Das Sekundärteil bzw. dessen als Abtriebsflansch ausgebildeter Abschnitt ist dabei unmittelbar oder in Verbindung eines weiteren Bauteils mittelbar an dem Halteelement abgestützt und/oder geführt.

Erfindungsgemäß erfolgt die Zentrierung des Sekundärteils an lokal abgewinkelten, gemeinsam einen Zentrierungsdurchmesser bildenden Abschnitten des Halteelementes. Auf der Außenkontur dieser Abschnitte, die in komplementäre Aussparungen bzw. Fenster des Sekundärteils eingreifen, ist das Sekundärteil geführt und zentriert. Endseitig bilden die axial gegenüber dem Sekundärteil vorstehenden Anschnitte Verzahnungsprofile, die für radial ausgerichtete Tellerfederzungen oder Finger einer Tellerfeder bestimmt sind, die einer Reibeinrichtung zugeordnet sind. Ein bevorzugtes Verzahnungsprofil sieht für jeden Abschnitt jeweils durch axiale Schlitze getrennte Fortsätze vor, die in einer Umfangsrichtung einen Hinterschnitt bzw. eine Rampenkontur und/oder eine Rastkontur bilden, die für Tellerfederzungen einer Tellerfeder bestimmt sind. Beispielsweise weist der mittige Fortsatz einen für eine mittige Tellerfederzunge bestimmten Hinterschnitt mit einer Rastkontur auf. Dagegen schließen die äußeren Fortsätze eine übereinstimmend schräg verlaufende Rampenkontur ein, die für weitere abweichend zur mittigen Tellerfederzunge gestaltete Tellerfederzungen bestimmt sind. Ein alternativ gestaltetes Verzahnungsprofil sieht Abschnitte mit zwei axialen Schlitzen vor, deren Fortsätze übereinstimmend in einer Richtung verlaufende Hinterschnitte mit einer Rampen- und abschließenden Rastkontur aufweisen. Dieses Verzahnungsprofil ist für eine Tellerfeder mit drei gleich geformten Tellerfederzungen vorgesehen.

Zur Montage wird die Tellerfeder zunächst in eine Position gebracht, bei der sich eine Lageübereinstimmung zwischen den Tellerfederzungen und den axialen Schlitzen im Halteelement einstellt. Anschließend erfolgt eine axiale Verschiebung der Tellerfeder, bevor mittels einer Verdrehung die Tellerfederzungen in dem Rastprofil bzw. der Rastkontur der Fortsätze von dem Haltelement kraft- und/oder formschlüssig verrasten. Die Tellerfeder ist damit dauerfest und wirksam gegen ein Verdrehen bzw. Lösen gesichert.

Erfindungsgemäß kann die Zentrierung des Sekundärteils weiterhin mittels eines an dem Primärteil fixierten getopften Halteelementes erfolgen, in dessen in Richtung der Federdämpferanordnung offenen Aufnahme eine an dem Sekundärteil befestigte ebenfalls getopfte Stützscheibe eingreift und abgestützt bzw. geführt ist. Vorteilhaft ist die Zentrierung damit in einem axial von dem Primärteil und dem Sekundärteil begrenzten und folglich geschützten Bauraum positioniert.

Als Reibeinrichtung schließt die Erfindung auf beiden Seiten des Sekundärteils axial geführte Reibringe ein, die außenseitig von dem Halteelement umschlossen sind.

Aufgrund dieser Anordnung ergibt sich eine mit der Zentrierung kombinierte Reibeinrichtung. Ein erster Reibring ist gegenseitig von dem Sekundärteil an einem radialen Abschnitt des Halteelementes abgestützt. Der zweite Reibring wird an der vom Sekundärteil abgewandten Seite von einer an einem Bord des Halteelementes abgestützten Tellerfeder beaufschlagt, deren Federkraft eine kraftschlüssige Anlage beider Reibringe an dem Sekundärteil bewirkt, die zu einer vorteilhaften geräuscharmen Reibeinrichtung führt.

Eine alternative Reibeinrichtung, die mit einer zwischen dem Primärteil und dem Sekundärteil positionierten Zentrierung kombiniert ist, schließt zwei in der Aufnahme des Halteelementes eingesetzte Reibringe ein, die beidseits axial an der mit dem Sekundärteil verbundenen Stützscheibe geführt sind. Die zur Kraftbeaufschlagung vorgesehene Tellerfeder ist unmittelbar an dem zum Sekundärteil ausgerichteten Reibring abgestützt. Gegenseitig ist der Reibring an einem endseitigen radial ausgerichteten Bord des Halteelementes abgestützt.

Die kompakte Bauweise unterstreichend schließt das erfindungsgemäße Zweimassenschwungrad außerdem ein zwischen der Bogenfederanordnung und der Zentrierung positioniertes, dem Sekundärteil zugeordnetes Fliehkraftpendel ein. Die Pendelmassen sind dabei auf beiden Seiten des flanschartigen Sekundärteils begrenzt beweglich angeordnet. Zur Vermeidung eines axialen Überstandes sind die Pendelmassen einem gestuften Abschnitt des Sekundärteils zugeordnet. Ergänzend dazu weist das Primärteil im Bereich der Pendelmassen eine axiale Aussparung auf, die eine ungehinderte Funktion des Fliehkraftpendels sicherstellt.

Das erfindungsgemäß zur abtriebsseitigen Abdeckung des Zweimassenschwungrades vorgesehene, aus einem dünnwandigen metallischen Werkstoff hergestellte, scheibenartig ausgeführte Blech ist an dem Primärteil befestigt. Das in einer Blechdicke S von ≤ 1,8 mm ausgelegte Blech ist bevorzugt stoffschlüssig, insbesondere mittels einer durch Laserschweißung hergestellten Schweißnaht an dem Primärteil dauerfest fixiert. Zur Erreichung einer definierten Lageposition und einfachen Handhabung bei der Vormontage bildet die Blechscheibe einen äußeren umlaufenden Bord, der bereichsweise eine Außenkontur des Primärteils umschließt. Als Maßnahme zur kraftschlüssigen Abstützung der Blechscheibe, die gleichzeitig den Federraum vor eindringenden Verunreinigungen schützt, kann die Blechscheibe axial vorgespannt an der Primärmasse befestigt werden. Damit ist das Blech im Einbauzustand kraftschlüssig und dichtend an dem Sekundärteil abgestützt.

Das gemäß der Erfindung aufgebaute, in axialer Richtung bauraumoptimierte Zweimassenschwungrad eignet sich bevorzugt für einen eine Doppelkupplung einschließenden Antriebsstrang. Unabhängig ob als Nasskupplung oder Trockenkupplung ausgeführt, benötigt die Doppelkupplung in axialer Richtung einen vergrößerten Bauraum, den das erfindungsgemäße Konzept vorteilhaft bietet.

Im Folgenden wird die Erfindung anhand von in neun Figuren abgebildeten Ausführungsbeispielen näher beschrieben. Die Erfindung ist jedoch nicht auf die gezeigten Ausführungsbeispiele beschränkt. Es zeigt:
- Fig. 1:: ein erstes erfindungsgemäßes Ausführungsbeispiel eines Zweimassenschwungrades (ZMS) in einem Halbschnitt;
- Fig. 2:: ein zweites erfindungsgemäßes Ausführungsbeispiel eines ZMS in einem Halbschnitt;
- Fig. 3:: ein Halteelement in einer Perspektive, das einem Sekundärteil von dem ZMS gemäß Fig. 1 zugeordnet ist;
- Fig. 4:: das Sekundärteil von dem ZMS gemäß Fig. 1 in einer Perspektive;
- Fig. 5:: eine Tellerfeder von dem ZMS gemäß Fig. 1 in einer Perspektive;
- Fig. 6:: die Tellerfeder gemäß Fig. 5, eingesetzt in dem Halteelement gemäß Fig. 3;
- Fig. 7:: ein alternativ gestaltetes Halteelement in einer Perspektive;
- Fig. 8:: das Verzahnungsprofil von dem Halteelement gemäß Fig. 7;
- Fig. 9:: das Verzahnungsprofil von Fig. 8 in Verbindung mit Tellerfederzungen in der Endlage.

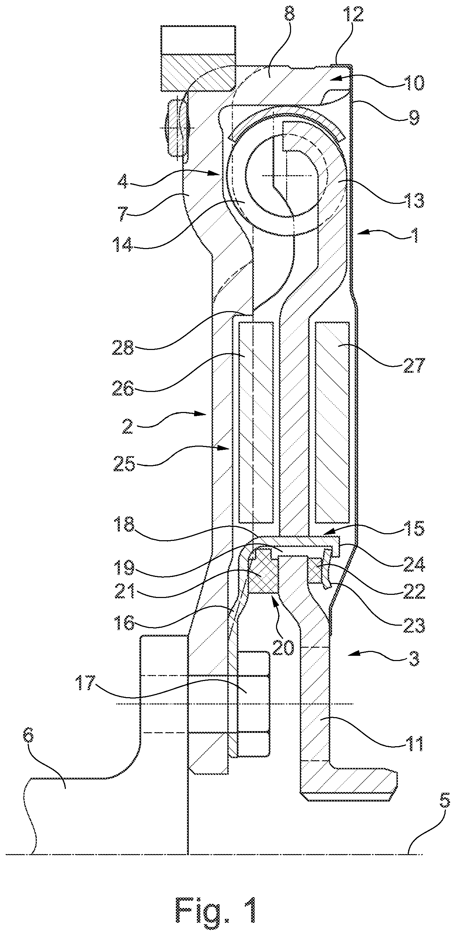

Die Fig. 1 zeigt ein auch Drehschwingungsdämpfer genanntes Zweimassenschwungrad (ZMS) 1, das im Antriebsstrang eines Fahrzeugs zwischen einer Kurbelwelle (nicht gezeigt) einer Brennkraftmaschine und einer insbesondere als Doppelkupplung ausgeführten Fahrzeugkupplung (nicht gezeigt) angeordnet ist. Das Drehmoment der Brennkraftmaschine wird dabei von einer Fahrzeugkupplung beispielsweise über ein Schaltgetriebe und ein Differenzialgetriebe in Verbindung mit Kardanwellen auf die Antriebsräder übertragen. Das Zweimassenschwungrad 1 umfasst ein auch Primärmasse genanntes Primärteil 2 sowie ein Sekundärteil 3 oder eine Sekundärmasse, die gegen die Kraft einer Federdämpferanordnung 4 begrenzt relativ zueinander um eine Rotationsachse 5 verdrehbar sind. Das Primärteil 2 umfasst einen antriebsseitigen, an einem Kurbelwellenflansch 6 befestigten Scheibenflansch 7, der mit einem außenseitigen abgewinkelten Schenkel 8 die Federdämpferanordnung 4 umschließt.

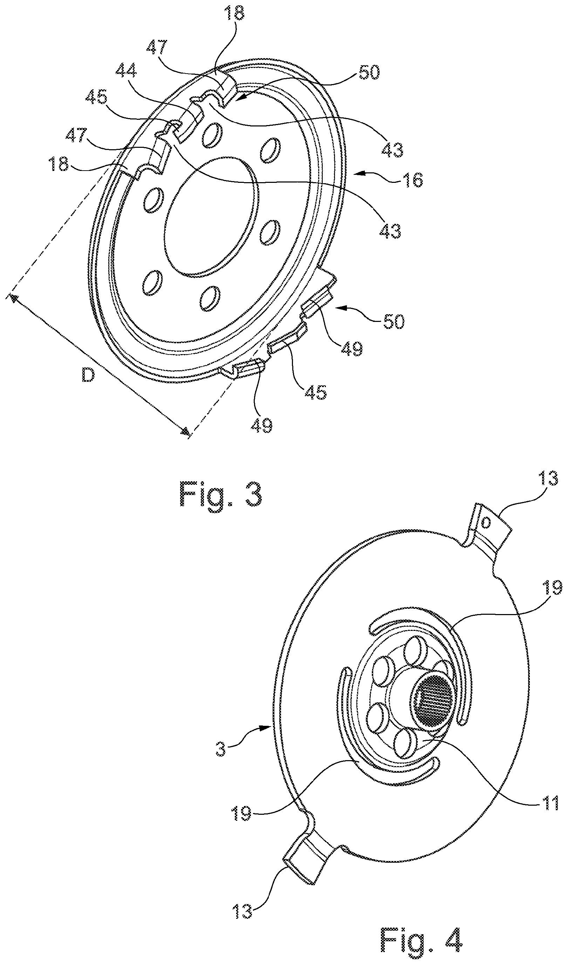

Kupplungsseitig oder abtriebsseitig ist an dem Schenkel 8 ein dünnwandiges, scheibenartig ausgeführtes Blech 9 stoffschlüssig mittels einer Laserschweißung, gekennzeichnet durch eine Schweißnaht 10, befestigt. Das Blech 9 erstreckt sich radial bis an einen die Funktion einer Abtriebsnabe 11 ausübenden Abschnitt des Sekundärteils 3 und umschließt gleichzeitig mit einem Bord 12 bereichsweise den Schenkel 8. Das scheibenartig einteilig aufgebaute Sekundärteil 3 bildet außenseitig zwei um 180° zueinander versetzte Flanschabschnitte 13 (gezeigt in Fig. 4), die mit Bogenfedern 14 der Federdämpferanordnung 4 in einer Wirkverbindung stehen. Eine Zentrierung 15 des Sekundärteils 3 umfasst ein getopftes bzw. abgewinkeltes Halteelement 16, das mittels Verschraubungen 17 gemeinsam mit dem Primärteil 2 an dem Kurbelwellenflansch 6 befestigt ist.

Zwei abgewinkelte, um 180° zueinander versetzte Abschnitte 18 des Halteelementes 16 (gezeigt in Fig. 3) greifen in korrespondierende Aussparungen 19 des Sekundärteils 3. Der Abschnitt 18 des Halteelementes 16 umschließt gleichzeitig eine Reibeinrichtung 20, die auf jeder Seite des Sekundärteils 3 einen Reibring 21, 22 umfasst, wobei der Reibring 21 zwischen einem radialen Abschnitt des Halteelementes 16 und dem Sekundärteil 3 und der Reibring 22 zwischen dem Sekundärteil 3 und einer Tellerfeder 23 eingesetzt ist. Über die an einem Bord 24 des Halteelementes 16 abgestützte Tellerfeder 23 sind beide Reibringe 21, 22 kraftschlüssig an dem Sekundärteil 3 angepresst. Weiterhin schließt das Zweimassenschwungrad 1 ein Fliehkraftpendel 25 bekannter Bauart und Wirkungsweise ein, dessen Pendelmassen 26, 27 beiderseits des Sekundärteils 3 beweglich angeordnet sind. Als Maßnahme zur Reduzierung der axialen Baulänge des Zweimassenschwungrades 1 ist für die Pendelmassen 26 in dem Primärteil 2 eine Aussparung 28 vorgesehen.

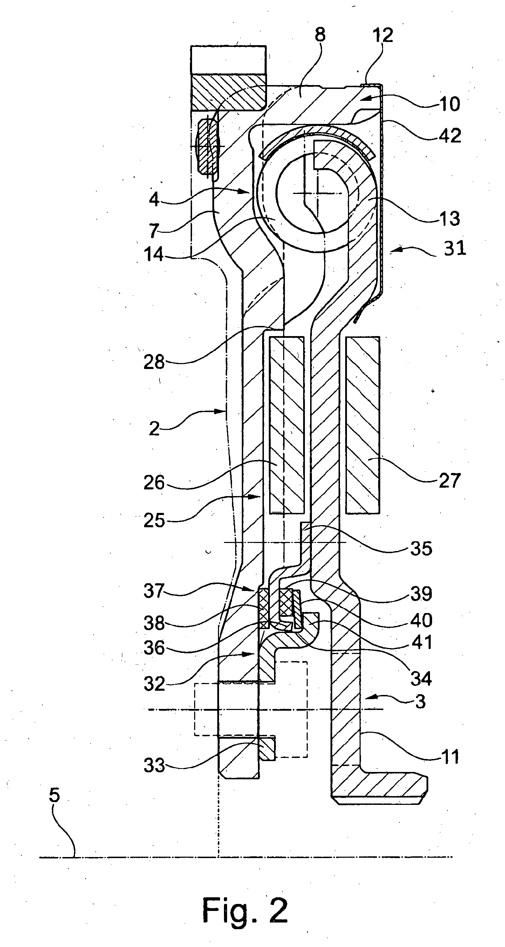

Die Fig. 2 zeigt ein weiteres Ausführungsbeispiel eines erfindungsgemäßen Zweimassenschwungrades, wobei für übereinstimmende Bauteile gleiche Bezugsziffern verwendet werden. Die folgende Beschreibung ist weitestgehend auf unterschiedliche Ausgestaltungen beschränkt.

Das in Fig. 2 gezeigte Zweimassenschwungrad (ZMS) 31 unterscheidet sich gegenüber dem ZMS 1 gemäß Fig. 1 im Wesentlichen durch eine abweichende Zentrierung 32 und eine abweichende Reibeinrichtung 37. Die innerhalb des Zweimassenschwungrades 31 positionierte Zentrierung 32 wird gebildet von einem getopften Halteelement 33, das vergleichbar mit Fig. 1 gemeinsam mit dem Primärteil 2 an dem Kurbelwellenflansch 6 befestigt ist. In eine in Richtung des Fliehkraftpendels 25 offene Aufnahme 34 des Halteelementes 33 ist eine am Sekundärteil 3 befestigte getopfte Stützscheibe 35 geführt und über einen endseitigen abgewinkelten Schenkel 36 abgestützt. Die Reibeinrichtung 37 umfasst die Reibringe 38, 39, die beidseits der Stützscheibe 35 positioniert sind. Der Reibring 39 ist von einer Tellerfeder 40 beaufschlagt, die sich gegenseitig an einem Bord 41 der Stützscheibe 35 abstützt und eine kraftschlüssige Anlage der Reibringe 38, 39 an dem Primärteil 2 sowie dem Sekundärteil 3 bewirkt. Abweichend zu dem Ausführungsbeispiel gemäß Fig. 1 schließt das Zweimassenschwungrad 31 zur stirnseitigen Abdeckung ein Blech 42 ein, das sich auf die Abdeckung der Federdämpferanordnung 4 beschränkt.

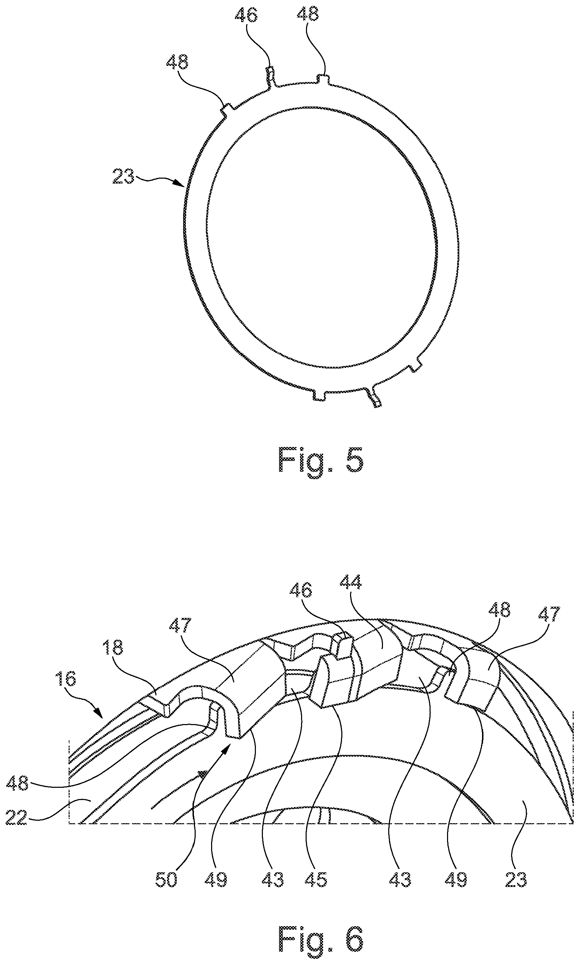

Die Fig. 3 bis Fig. 6 verdeutlichen Details der Zentrierung 15 und der Reibeinrichtung 20 gemäß dem in Fig. 1 gezeigten Ausführungsbeispiel. Das getopft ausgeführte Halteelement 16 ist in Fig. 3 als Einzelteil in der Perspektive gezeigt und umfasst zwei um 180° zueinander versetzte Abschnitte 18, die endseitig nach innen abgekantet sind. Jeweils zwei axial verlaufende, auch Einschnitte genannte Schlitze 43 der Abschnitte 18 bilden ein Verzahnungsprofil 50 mit drei Fortsätzen. Der mittige Fortsatz 44 mit einem in einer Umfangsrichtung verlaufenden Hinterschnitt bildet eine Rastkontur 45 für eine mittige Tellerfederzunge 46 der in Fig. 5 gezeigten Tellerfeder 23. Die äußeren Fortsätze 47 bilden übereinstimmend schräg verlaufende, für äußere Führungszungen 48 der Tellerfeder 23 bestimmte Rampenkonturen 49. Die Fig. 6 zeigt die Tellerfeder 23 im eingebauten Zustand. Zur Montage der Tellerfeder 23 wird zunächst die Tellerfederzunge 46 sowie eine Führungszunge 48 axial in einen zugehörigen Schlitz 43 eingeführt und anschließend in Pfeilrichtung verdreht, bis die Tellerfederzunge 46 formschlüssig in der Rastkontur 45 verrastet. Synchron dazu sind die weiteren äußeren Führungszungen 48 an den schräg verlaufenden Rampenkonturen 49 der Fortsätze 47 kraftschlüssig abgestützt. In der Fig. 4 ist das einteilig aufgebaute Sekundärteil 3 in einer Einzelteilzeichnung in der Perspektive gezeigt, das zwei nahezu halbkreisförmige Aussparungen 19 für die Abschnitte 18 des Haltelementes 16 einschließt. Die Außenkonturen der Aussparungen 19, die sich radial an die zentrale Abtriebsnabe 11 anschließen definieren einen Zentrierungsdurchmesser D (gezeigt in Fig. 3) für das Sekundärteil 3.

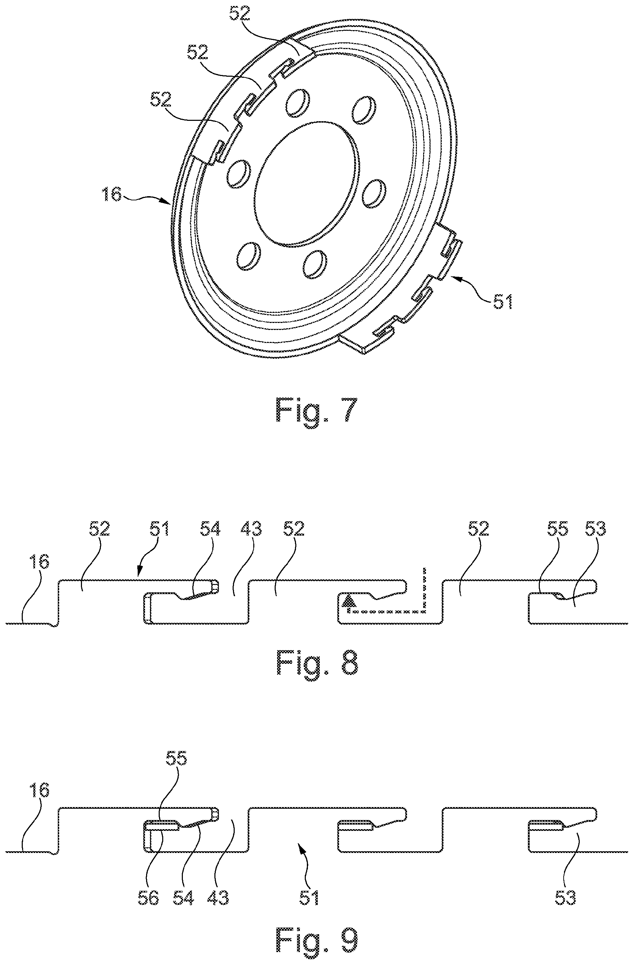

In den Fig. 7 bis Fig. 9 ist ein alternativ gestaltetes, für die Abschnitte 18 bestimmtes Verzahnungsprofil 51 gezeigt, das zwei axiale Schlitze 43 und drei übereinstimmend gestaltete Fortsätze 52 umfasst. Jeder Fortsatz bildet einen Hinterschnitt 53, der eine Rampenkontur 54 und eine abschließende Rastkontur 55 einschließt. In Fig. 8 ist strichliniert der Weg der Tellerfederzunge 56 zur Montage der Tellerfeder 40 bis zur Erreichung der Rastkontur 55 gezeigt. Die Fig. 9 zeigt die Tellerfederzungen 56 in der Endlage.

### Bezugszeichenliste

- 1: Zweimassenschwungrad
- 2: Primärteil
- 3: Sekundärteil
- 4: Federdämpferanordnung
- 5: Rotationsachse
- 6: Kurbelwellenflansch
- 7: Scheibenflansch
- 8: Schenkel
- 9: Blech
- 10: Schweißnaht
- 11: Abtriebsnabe
- 12: Bord
- 13: Flanschabschnitt
- 14: Bogenfeder
- 15: Zentrierung
- 16: Halteelement
- 17: Verschraubung
- 18: Abschnitt
- 19: Aussparung
- 20: Reibeinrichtung
- 21: Reibring
- 22: Reibring
- 23: Tellerfeder
- 24: Bord
- 25: Fliehkraftpendel
- 26: Pendelmasse
- 27: Pendelmasse
- 28: Aussparung
- 31: Zweimassenschwungrad
- 32: Zentrierung
- 33: Halteelement
- 34: Aufnahme
- 35: Stützscheibe
- 36: Schenkel
- 37: Reibeinrichtung
- 38: Reibring
- 39: Reibring
- 40: Tellerfeder
- 41: Bord
- 42: Blech
- 43: Schlitz
- 44: Fortsatz
- 45: Rastkontur
- 46: Tellerfederzunge
- 47: Fortsatz
- 48: Führungszunge
- 49: Rampenkontur
- 50: Verzahnungsprofil
- 51: Verzahnungsprofil
- 52: Fortsatz
- 53: Hinterschnitt
- 54: Rampenkontur
- 55: Rastkontur
- 56: Tellerfederzunge
- S: Blechdicke

## Patentansprüche

1. Zweimassenschwungrad, aufweisend ein Primärteil (2) und ein Sekundärteil (3), die um eine Rotationsachse (5) relativ zueinander begrenzt verdrehbar sind, eine zwischen dem Primärteil (2) und dem Sekundärteil (3) wirksame, Bogenfedern (14) einschließende Federdämpferanordnung (4), eine Reibeinrichtung (20, 37) mit zumindest einem federkraftbelasteten Reibring (21, 22; 38, 39) sowie ein dem Sekundärteil (3) zugeordnetes Fliehkraftpendel (25), wobei das einteilig aufgebaute Sekundärteil (3) äußere, mit den Bogenfedern (14) zusammenwirkende Flanschabschnitte (13) sowie eine Abtriebsnabe (11) bildet und an dem Primärteil (2) ein Halteelement (16, 33) angeordnet ist, über das eine Zentrierung (15, 32) des Sekundärteils (3) erfolgt und das Zweimassenschwungrad (1, 31) abtriebsseitig von einem dünnwandigen Blech (9, 42) abgedeckt ist, wobei die Zentrierung (15, 32) des Sekundärteils (3) zumindest ein getopftes Halteelement (16, 33) umfasst, das gemeinsam mit dem Primärteil (2) an einem Kurbelwellenflansch (6) verschraubt ist, **dadurch gekennzeichnet, dass** lokal abgewinkelte, einen Zentrierungsdurchmesser D bildende Abschnitte (18) des Halteelementes (16) durch Aussparungen (19) des Sekundärteils (3) geführt sind, die endseitig Verzahnungsprofile (50, 51) bilden, in die radial ausgerichtete Tellerfederzungen (46, 56) einer Tellerfeder (23) verrasten.

2. Zweimassenschwungrad nach Anspruch 1, **dadurch gekennzeichnet, dass** jedes Verzahnungsprofil (50, 51) durch axiale Schlitze (43) getrennte Fortsätze (44, 47; 52) aufweist, die eine Rampenkontur (49, 54) und/oder eine Rastkontur (45, 55) bilden.

3. Zweimassenschwungrad nach Anspruch 1, **dadurch gekennzeichnet, dass** in das eine Aufnahme (34) bildende Halteelement (33) eine an dem Sekundärteil (3) befestigte getopfte Stützscheibe (35) eingreift und geführt ist.

4. Zweimassenschwungrad nach einem der vorhergehenden Ansprüche, **dadurch gekennzeichnet, dass** die Reibeinrichtung (20) zwei beidseits des Sekundärteils (3) geführte Reibringe (21, 22) umfasst, die außenseitig von dem Halteelement (16) umschlossen und von einer Tellerfeder (23) beaufschlagt sind.

5. Zweimassenschwungrad nach einem der vorhergehenden Ansprüche, **dadurch gekennzeichnet, dass** die Reibeinrichtung (37) zwei beidseits der Stützscheibe (35) geführte Reibringe (38, 39) umfasst, die gemeinsam in der Aufnahme (34) des Halteelementes (33) eingesetzt und von einer Tellerfeder (40) beaufschlagt sind.

6. Zweimassenschwungrad nach einem der vorhergehenden Ansprüche, **dadurch gekennzeichnet, dass** zwischen der Federdämpferanordnung (4) und der Zentrierung (15) das Fliehkraftpendel (25) an dem Sekundärteil (3) positioniert ist.

7. Zweimassenschwungrad nach einem der vorhergehenden Ansprüche, **dadurch gekennzeichnet, dass** das Zweimassenschwungrad (1, 31) abtriebsseitig von einem am Primärteil (2) fixierten, mittels Laserschweißung befestigten Blech (9, 42) mit einer Blechdicke S von ≤ 1,8 mm zumindest bereichsweise abgedeckt ist.

8. Zweimassenschwungrad nach einem der vorhergehenden Ansprüche, **dadurch gekennzeichnet, dass** das Zweimassenschwungrad (1, 31) für einen Antriebsstrang bestimmt ist, der eine Doppelkupplung einschließt.

## Claims

1. A dual mass flywheel, comprising a primary part (2) and a secondary part (3) which can be rotated to a limited extent in relation to one another about an axis of rotation (5), a spring damper arrangement (4) comprising torsion springs (14), which is effective between the primary part (2) and the secondary part (3), a friction device (20, 37) having at least one spring tension loaded friction ring (21, 22; 38, 39) as well as a centrifugal pendulum-type absorber (25) associated with the secondary part (3), the integrally formed secondary part (3) forming outer flange sections (13) cooperating with the torsion springs (14) as well as an output hub (11), and a retaining element (16, 33) being arranged on the primary part (2), via which a centring (15, 32) of the secondary part (3) is achieved, and the dual mass flywheel (1, 31) is covered on the output side by a thin-walled plate (9, 42), the centring (15, 32) of the secondary part (3) comprising at least one potted retention element (16, 33) which is screwed together with the primary part (2) to a crankshaft flange (6), **characterized in that** locally angled sections (18) of the retention element (16) forming a centring diameter D are guided through recesses (19) in the secondary part (3), which form toothing profiles (50, 51) at the ends, into which radially aligned disc spring tongues (46, 56) of a disc spring (23) engage.

2. The dual mass flywheel according to claim 1, **characterized in that** each toothing profile (50, 51) has extensions (44, 47; 52) separated by axial slits (43), which form a ramp contour (49, 54) and/or a detent contour (45, 55).

3. The dual mass flywheel according to claim 1, **characterized in that** a potted support disc (35) fastened to the secondary part (3) engages and is guided in the retaining element (33) forming a receptacle (34).

4. The dual mass flywheel according to one of the preceding claims, **characterized in that** the friction device (20) comprises two friction rings (21, 22) guided on both sides of the secondary part (3), which are enclosed on the outside by the retaining element (16) and acted upon by a disc spring (23).

5. The dual mass flywheel according to one of the preceding claims, **characterized in that** the friction device (37) comprises two friction rings (38, 39) guided on both sides of the support disc (35), which are inserted jointly into the receptacle (34) of the retaining element (33) and acted upon by a disc spring (40).

6. The dual mass flywheel according to one of the preceding claims, **characterized in that** the centrifugal pendulum-type absorber (25) is positioned on the secondary part (3) between the spring damper arrangement (4) and the centring (15).

7. The dual mass flywheel according to one of the preceding claims, **characterized in that** the dual mass flywheel (1, 31) is covered, at least in sections, on the output side by a plate (9, 42) fixed to the primary part (2) by means of laser welding and having a plate thickness S of ≤ 1.8 mm.

8. The dual mass flywheel according to one of the preceding claims, **characterized in that** the dual mass flywheel (1, 31) is intended for a drive train that includes a dual clutch.

## Revendications

1. Double volant amortisseur comprenant une partie primaire (2) et une partie secondaire (3) lesquelles peuvent tourner de manière limitée l'une par rapport à l'autre autour d'un axe de rotation (5), un agencement d'amortisseur à ressort (4) qui agit entre la partie primaire (2) et la partie secondaire (3) et qui comprend des ressorts en arc (14), un dispositif de friction (20, 37) avec au moins une friction (21, 22 ; 38, 39) sollicitée par un ressort, ainsi qu'un pendule à force centrifuge (25) associé à la partie secondaire (3), la partie secondaire (3), qui est construite en une seule pièce, formant des sections de bride externes (13) interagissant avec les ressorts en arc (14) ainsi qu'un moyeu de sortie (11) et un élément de maintien (16, 33) étant disposé sur la partie primaire (2), par lequel un centrage (15, 32) de la partie secondaire (3) est effectué et le double volant amortisseur (1, 31) étant recouvert du côté sortie par une tôle à paroi mince (9, 42), le centrage (15, 32) de la partie secondaire (3) comprenant au moins un élément de maintien en pot (16, 33) qui est vissé avec la partie primaire (2) sur une bride de vilebrequin (6), **caractérisé en ce que** des sections localement coudées (18) de l'élément de retenue (16) formant un diamètre de centrage D sont guidées à travers des évidements (19) de la partie secondaire (3), qui forment des profils de denture (50, 51) aux extrémités, dans lesquels viennent en prise des languettes de ressort à disque (46, 56) alignées radialement d'un ressort à disque (23).

2. Double volant amortisseur selon la revendication 1, **caractérisé en ce que** chaque profil de denture (50, 51) présente des saillies (44, 47 ; 52) séparées par des fentes axiales (43) qui forment un contour de rampe (49, 54) et/ou un contour d'encliquetage (45, 55).

3. Double volant amortisseur selon la revendication 1, **caractérisé en ce qu'**un disque d'appui (35) en pot fixé à la partie secondaire (3) vient en prise et est guidé dans l'élément de retenue (33) formant un réceptacle (34).

4. Double volant amortisseur selon l'une quelconque des revendications précédentes, **caractérisé en ce que** le dispositif de friction (20) comprend deux anneaux de friction (21, 22) qui sont guidés de part et d'autre de la partie secondaire (3), sont entourés extérieurement par l'élément de maintien (16) et sont sollicités par un ressort à disque (23).

5. Double volant amortisseur selon l'une quelconque des revendications précédentes, **caractérisé en ce que** le dispositif de friction (37) comprend deux anneaux de friction (38, 39) qui sont guidés de part et d'autre du disque d'appui (35), sont insérés conjointement dans le réceptacle (34) de l'élément de maintien (33) et sont sollicités par un ressort à disque (40).

6. Double volant amortisseur selon l'une quelconque des revendications précédentes, **caractérisé en ce que** le pendule à force centrifuge (25) est positionné sur la partie secondaire (3) entre l'agencement d'amortisseur à ressort (4) et le centrage (15).

7. Double volant amortisseur selon l'une quelconque des revendications précédentes, **caractérisé en ce que** le double volant amortisseur (1, 31) est recouvert au moins partiellement du côté sortie par une tôle (9, 42) fixée à la partie primaire (2) par soudage laser et présentant une épaisseur de tôle S de ≤ 1,8 mm.

8. Double volant amortisseur selon l'une quelconque des revendications précédentes, **caractérisé en ce que** le double volant amortisseur (1, 31) est destiné à une chaîne cinématique comprenant un double embrayage.
